# EUROPÄISCHE PATENTSCHRIFT

(11) **EP 0 556 477 B1**
(45) Veröffentlichungstag und Bekanntmachung des Hinweises auf die Patenterteilung: **18.01.1995**
(21) Anmeldenummer: 92121432.6
(22) Anmeldetag: 17.12.1992
(51) Int. Cl.: B60K 25/00

(54) **Hydrostatisch-mechanischer Antrieb von Nebenaggregaten, insbesondere Lüfter, Generator, Wasserpumpe, eines Fahrzeuges**
Hydrostatic-mechanical drive for vehicle accessories, especially ventilator, generator, waterpump
Entraînement hydrostatique-mécanique des accessoires d'un véhicule automobile, notamment ventilateur, générateur, pompe à eau

(30) Priorität: 18.02.1992 DE 4204834
(43) Veröffentlichungstag der Anmeldung: 25.08.1993
(73) Patentinhaber: MAN Nutzfahrzeuge Aktiengesellschaft, 80976 München (DE)
(72) Erfinder: Hagin, Faust, Dipl.-Ing., W-8000 München 2 (DE); Drewitz, Hans, Dipl.-Ing., W-8000 München 40 (DE); Knetsch, Holger, W-8060 Dachau (DE)

(56) Entgegenhaltungen:
- EP-A- 0 458 050
- DE-A- 3 902 138
- GB-A- 2 180 022

## Beschreibung

Die Erfindung betrifft einen hydrostatisch-mechanischen Antrieb von Nebenaggregaten insbesondere Lüfter, Generator, Wasserpumpe, eines Fahrzeuges mit Merkmalen entsprechend dem Oberbegriff des Anspruchs 1.

Die Erfindung geht aus von einem Stand der Technik wie aus Band 1, Beiträge zum Fachgebiet Hydraulik, des 9. Aachener fluidtechnischen Kolloquiums vom 20. bis 22.3. 1990, bekannt. Im Beitrag gemäß Seiten 196 - 214 besagter Veröffentlichung ist die Möglichkeit eines hydrostatischen Antriebes von Nebenaggregaten eines Kraftfahrzeuges angesprochen, mit einer von der Brennkraftmaschine des Fahrzeugs aus antreibbaren, in offenem oder geschlossenem Kreislauf betriebenen Druckölförderanlage zur Versorgung eines Hydrostatmotors, an dem die Nebenaggregate mechanisch angeschlossen sind. In Seiten 210 - 213 sind dabei mehrere Prinzipien skizzenhaft mit Kurzbeschreibung dargelegt. Im Beitrag gemäß Seiten 218 - 242 besagter Veröffentlichung ist ebenfalls die Rede von einem zukünftig möglichen hydrostatischen Antrieb des Lüfters, Generators und Klimakompressors eines Kraftfahrzeuges mit von dessen Brennkraftmaschine aus angetriebener Pumpe und hydrostatisch von letzterer versorgtem Hydrostatmotor, an dem die besagten Nebenaggregate angekoppelt sind.

Ein solcher bekannter Antrieb ist auch beschrieben in Dokument EP-A-0 458 050.

Obschon solche bekannte hydrostatisch-mechanischen Nebenaggregate-Antriebe gegenüber herkömmlichen direkt motorseitig angetriebenen Nebenaggregaten schon gewisse Vorteile bieten, sind deren Möglichkeiten bislang noch nicht voll ausgeschöpft. Die bekannten hydrostatisch-mechanischen Nebenaggregate-Antriebe arbeiten mit einem Wirkungsgrad unter 80% und haben außerdem den Nachteil, daß die hydrostatischen Komponenten - Pumpe, Hydrostatmotor - meist einen relativ hohen Geräuschpegel entwickeln.

Es ist daher Aufgabe der Erfindung, einen hydrostatisch-mechanischen Antrieb von Nebenaggregaten zu schaffen, der eine flexible Anpassung an die Leistungserfordernisse der Nebenaggregate ermöglicht und bei gleichzeitig geräuschärmerem Betrieb einen Wirkungsgrad in der Größenordnung von ca. 90% aus der motorseitig zugeführten Leistung ermöglicht.

Diese Aufgabe ist erfindungsgemäß durch einen hydrostatisch-mechanischen Antrieb der Nebenaggregate mit Merkmalen entsprechend dem Kennzeichen des Anspruchs 1 gelöst.

Vorteilhafte Ausgestaltungen dieser Lösung sind in den Unteransprüchen angegeben.

Der erfindungsgemäße Nebenaggregate-Antrieb ermöglicht in Verbindung mit einer entsprechenden Regelung eine extrem günstige Anpassung und Umsetzung der motorseitig zugeführten Leistung in einen bedarfsoptimierten Betrieb der einzelnen Nebenaggregate. Diese Flexibilität ist erst durch die stufenlose Regelbarkeit der Pumpe in Verbindung mit dem Hydrostatmotor und dem Planetendifferential erreichbar.

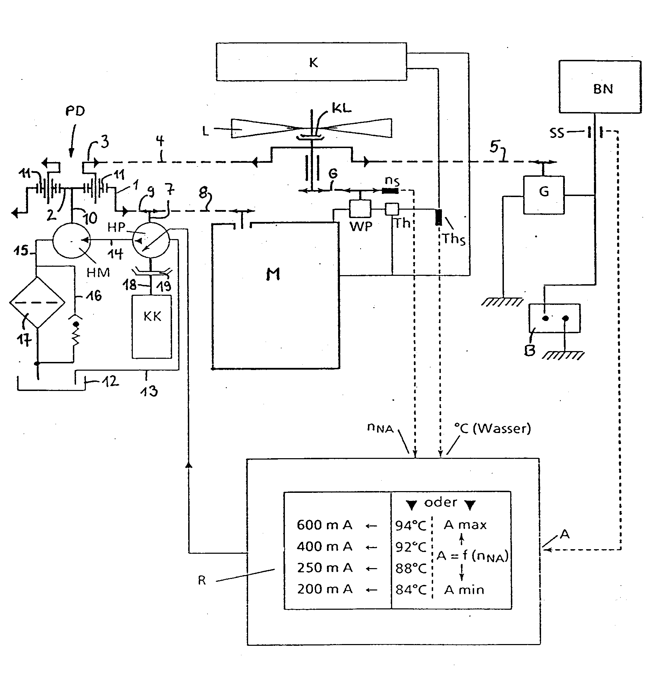

Nachstehend ist eine Ausführungsform der erfindungsgemäßen Lösung anhand einer in der Zeichnung dargestellten Prinzipskizze noch näher erläutert.

In der Zeichnung ist mit M ein Antriebsmotor des Fahrzeuges bezeichnet. Dabei kann es sich um eine Wärmekraftmaschine beliebiger Bauart, z. B. einen Diesel- oder Ottomotor und dergleichen handeln. Sofern das Fahrzeug über eine Bi-Motor-Anlage bzw. eine Hybridantriebseinrichtung mit zwei Antriebsmotoren verfügt, die wahlweise oder gemeinsam auf die anzutreibende(n) Achse(n) wirken, dann ist als Antriebsmotor M auch ein solches bi-motoriges Antriebsaggregat zu verstehen.

Diesem Antriebsaggregat M sind Nebenaggregate zugeordnet, wobei der einem Kühler K zugeordnete Lüfter mit L, der das elektrische Bordnetz BN und die Batterie B des Fahrzeugs mit elektrischer Energie versorgende Generator mit G und die im Kühlmittelkreislauf des Antriebsmotors M angeordnete Wasserpumpe mit WP bezeichnet sind. In Verbindung mit diesen Nebenaggregaten L, G, WP ist in der Zeichnung der erfindungsgemäße hydrostatisch-mechanische Antrieb dargestellt. Als weitere Nebenaggregate sind in einer entsprechenden Ausbaustufe des Systems gegebenenfalls auch ein die Druckluftanlage des Fahrzeugs versorgender, entkuppelbarer Luftpresser und eine Lenkhilfepumpe denkbar.

Der Antrieb der Nebenaggregate erfolgt über ein stufenloses hydrostatischmechanisches Getriebe, das eine Pumpe HP, einen Hydrostatmotor HM und ein dreiwelliges Planetendifferential PD umfaßt. Dabei steht das Hohlrad 1 des Planetendifferentials PD mit dem Antriebsmotor M und der Pumpe HP sowie das Sonnenrad 2 des Planetendifferentials PD mit dem Hydrostatmotor HM jeweils in fester Antriebsverbindung. Der Antrieb der Nebenaggregate L, G, WP erfolgt vom Steg 3 des Planetendifferentials PD ausgehend über entsprechende Transmissionen 4, 5, 6.

Vorzugsweise ist die feste Antriebsverbindung zwischen Antriebsmotor M und Welle 7 der Pumpe HP über einen Zahn- bzw. Poly-V-Riemen 8 hergestellt. Über eine ebensolche Verbindung mit einem Zahn- bzw. Poly-V-Riemen 9 ist vorzugsweise auch die feste Antriebsverbindung zwischen Pumpenwelle 7 und Hohlrad 1 des Planetendifferentials PD hergestellt.

Die Welle 10 des Hydrostatmotors kann entweder direkt (wie in der Zeichnung dargestellt) oder indirekt über einen Getriebezug bzw. einen Zahn- bzw. Poly-V-Riemen mit dem Sonnenrad 2 des Planetendifferentials PD verbunden sein. Eine besonders gedrängte Bauweise ergibt sich, wenn der Hydrostatmotor HM mit seiner Welle 10 koaxial zur Rotationsachse des Planetendifferentials PD und möglichst nahe bei letzterem angeordnet ist.

Der Durchmesser des Sonnenrades 2 ist vorzugsweise wenigstens um Faktor 2 größer als der Durchmesser des/der die Verbindung zum Hohlrad 1 herstellenden und am Steg 3 gelagerten Planetenrades/Planetenräder 11.

Ferner gehorcht zumindest die Pumpe HP, vorzugsweise jedoch auch der Hydrostatmotor HM der Axialkolbenbauart.

Die Pumpe HP ist hinsichtlich ihrer Förderleistung bei maximaler Drehzahl nₘₐₓ auf vorzugsweise mindestens die 3-fache Durchflußmenge jener des Hydrostatmotors HM bei dessen maximaler Drehzahl nₘₐₓ ausgelegt.

Die Pumpe HP ist in einem weiten Bereich verstellbar, saugt Öl aus einem Vorratstank 12 über eine Saugleitung 13 an und fördert einen Druckölstrom über eine Druckleitung 14 zum Hydrostatmotor HM. Dieser den Hydrostatmotor HM antreibende Druckölstrom gelangt ausgangs desselben über eine Rücklaufleitung 15 mit eingebautem, über einen Bypaß 16 umgehbaren Filter/Ölkühler 17 wieder in den Vorratstank 12 zurück.

Sofern das Fahrzeug über eine Klimaanlage verfügt, kann der zugehörige Klimakompressor KK über einen Triebstrang 18 mit schaltbarer Kupplung 19 mit der Welle 7 der Pumpe HP verbunden und wieder getrennt werden.

Für das Betriebsmanagement des Nebenaggregate-Antriebes ist eine elektronische Regel- und Steuereinrichtung R vorgesehen. Diese hat einen für solche Regeleinrichtungen üblichen Aufbau mit Ein- und Ausgabeperipherie, Daten- und Programmspeichern und Mikroprozessor, welche Organe über ein internes Daten-BUS-System miteinander verknüpft sind. Die Regel- und Steuereinrichtung R arbeitet auf der Basis ihr von Sensoren zugeführter Istwerte, die Rückschluß auf das Arbeiten und den Zustand bzw. Leistungsbedarf der Nebenaggregate geben. So liefert beispielsweise ein Drehzahlsensor nₛ die Drehzahl n_{NA}, die für die Antriebsdrehzahl der Nebenaggregate maßgeblich ist. Ein Thermosensor Thₛ liefert ein Temperatursignal, das für die Kühlwassertemperatur im Kühlmittelkreis des Antriebsmotors M repräsentativ ist. Ein Stromsensor SS liefert ein Signal, das für den Strombedarf des elektrischen Bordnetzes BN des Fahrzeuges repräsentativ ist. Gegebenenfalls können auch noch weitere Sensoren an anderen Stellen des Systems vorgesehen sein, die entsprechend weitere betriebsrepräsentative Istwerte melden.

Die Regel- und Steuereinrichtung R vergleicht diese Istwerte per Programm mit abgespeicherten Datenreihen, welche für einen bedarfsoptimierten Betrieb der Nebenaggregate repräsentativ und beispielhaft in der Zeichnung innerhalb des die Regel- und Steuereinrichtung R markierenden Feldes angegeben sind. Auf der Basis dieser internen Vergleiche ist mit der Regel- und Steuereinrichtung R eine Regelung des Nebenaggregate-Antriebes in dem Sinne durchführbar, daß das dem leistungsbedürftigsten Verbraucher - Kühlkreislauf des Antriebsmotors M mit Kühler K, elektrisches Bordnetz BN des Fahrzeugs - zugeordnete Nebenaggregat - Lüfter L, Wasserpumpe WP, Generator G - mit noch ausreichender minimaler Drehzahl betrieben wird. Dabei kann eine Priorität in der Reihenfolge Lüfter, Generator, Wasserpumpe vorgegeben sein. Im Sinne einer besonders schleppverlustarmen Regelung kann dabei der Lüfter durch die Regel- und Steuereinrichtung R über eine Kupplung KL an seinem Triebstrang 4 ab- und ankuppelbarsein.

Außerdem kann die Regel- und Steuereinrichtung R auf der Basis des vom Stromsensor SS gelieferten Signales für eine Regelung des Systems in der Weise sorgen, daß der Generator G mit einer solchen Drehzahl betrieben wird, die für eine direkte Versorgung des angeschlossenen elektrischen Bordnetzes BN und zumindest weitestgehende Deckung von dessen Energiebedarf ausreicht, so daß die ebenfalls am Generator G angeschlossene Batterie B nicht oder nur geringfügig für die Bordnetzenergieversorgung in Anspruch genommen werden muß. Dies bedeutet eine hohe Lebensdauer der Batterie, welche somit im wesentlichen nur für die Bereitstellung derAntriebsmotor-Anlaßenergie-herangezogen wird.

## Patentansprüche

1. Hydrostatisch-mechanischer Antrieb von Nebenaggregaten, insbesondere Lüfter, Generator, Wasserpumpe, eines Fahrzeugs, mit einer von einem Fahrzeug-Antriebsmotor her angetriebenen, verstellbaren Pumpe (HP) und einem von dieser durch einen Druckölstrom antreibbaren Hydrostatmotor (HM), dadurch gekennzeichnet, daß der Nebenaggregate-Antrieb über ein stufenloses hydrostatisch-mechanisches, die Pumpe (HP), den Hydrostatmotor (HM) und ein dreiwelliges Planetendifferential (PD) umfassendes Getriebe erfolgt, wobei das Hohlrad (1) des Planetendifferentiales (PD) mit dem Antriebsmotor (M) und der Pumpe (HP) sowie das Sonnenrad (2) des Planetendifferentiales (PD) mit dem Hydrostatmotor (HM) jeweils in fester Antriebsverbindung stehen und der Antrieb der Nebenaggregate (L, G, WP) vom Steg (3) des Planetendifferentials (PD) ausgehend über entsprechende Transmission (4, 5, 6) erfolgt.

2. Nebenaggregate-Antrieb nach Anspruch 1, dadurch gekennzeichnet, daß der Antrieb vom Antriebsmotor (M) zur Pumpenwelle (7) sowie von dieser zum Hohlrad (1) des Planetendifferentials (PD) jeweils über einen Zahn- bzw. Poly-V-Riemen (8, 9) erfolgt.

3. Nebenaggregate-Antrieb nach Anspruch 1, dadurch gekennzeichnet, daß die Welle (10) des Hydrostatmotors (HM) direkt oder indirekt über einen Getriebezug bzw. einen Zahn- bzw. Poly-V-Riemen mit dem Sonnenrad (2) des Planetendifferentials (PD) verbunden ist.

4. Nebenaggregate-Antrieb nach Anspruch 1, dadurch gekennzeichnet, daß der Durchmesser des Sonnenrades (2) wenigstens um Faktor 2 größer ist als der Durchmesser des/der die Verbindung zum Hohlrad (1) herstellenden und am Steg (3) gelagerten Planetenrades/Planetenräder (11).

5. Nebenaggregate-Antrieb nach Anspruch 1, dadurch gekennzeichnet, daß zumindest die Pumpe (HP), vorzugsweise auch der Hydrostatmotor (HM) der Axialkolbenbauart gehorcht.

6. Nebenaggregate-Antrieb nach Anspruch 1, dadurch gekennzeichnet, daß die Welle (7) der Pumpe (HP) über einen Triebstrang (18) mit schaltbarer Kupplung (19) mit einem solchermaßen zuschaltbarem Klimakompressor (KK) verbindbar ist.

7. Nebenaggregate-Antrieb nach Anspruch 1, dadurch gekennzeichnet, daß die Pumpe (HP) bei nₘₐₓ mindestens die 3-fache Durchflußmenge als der Hydrostatmotor (HM) bei nₘₐₓ hat.

8. Nebenaggregate-Antrieb nach Anspruch 1, dadurch gekennzeichnet, daß eine elektronische Regel- und Steuereinrichtung (R) vorgesehen ist, mit Ein- und Ausgabeperipherie, Daten- und Programmspeichern und Mikroprozessor, welche Organe über ein internes Daten-BUS-System miteinander verknüpft sind.

9. Nebenaggregate-Antrieb nach Anspruch 8, dadurch gekennzeichnet, daß mit der Regel- und Steuereinrichtung (R) eine Regelung des Nebenaggregate-Antriebes in dem Sinne durchführbar ist, daß das dem leistungsbedürftigsten Verbraucher zugeordnete Nebenaggregat mit noch ausreichender minimaler Drehzahl betrieben wird.

10. Nebenaggregate-Antrieb nach Anspruch 8, dadurch gekennzeichnet, daß die Regel- und Steuereinrichtung (R) von einem Stromsensor (SS) den Strombedarf des elektrischen Bordnetzes (BN) des Fahrzeuges mitgeteilt bekommt und auf der Basis dieser Information für eine Regelung des Systems in der Weise sorgt, daß der Generator (G) mit einer Drehzahl betrieben wird, die für eine direkte Versorgung des elektrischen Bordnetzes (BN) ausreicht, so daß die Batterie (B) nicht oder nur geringfügig für die Bordnetzenergieversorgung in Anspruch genommen werden muß.

11. Nebenaggregate-Antrieb nach Anspruch 8, dadurch gekennzeichnet, daß der Lüfter (L) abhängig von der Regelung durch die Regel- und Steuereinrichtung (R) über eine Kupplung (KL) an seinem Triebstrang ab- und ankoppelbar ist.

## Claims

1. Hydrostatic mechanical drive of ancillary components, particularly fan, alternator, water pump, of a vehicle with an adjustable pump (HP) driven by a vehicle drive engine and a hydrostatic motor (HM) driven by said pump (HP) by means of a pressurised oil flow, characterised in that the ancillary components are driven by a continuously variable, hydrostatic mechanical gearbox comprising the pump (HP), hydrostatic motor (HM) and a three-shaft planetary gear differential (PD), a firm drive connection being established between the ring gear (1) of the planetary gear differential (PD) and the drive engine (M) and pump (HP) and between the sun gear (2) of the planetary gear differential (PD) and the hydrostatic motor (HM), the ancillary components (L G, WP) being driven from the spider (3) of the planetary gear differential (PD) via a corresponding transmission (4, 5, 6).

2. Ancillary component drive according to Claim 1, characterised in that the drive from the drive engine (M) to the pump shaft (7) and from this to the ring gear (1) of the planetary gear differential (PD) is established via a toothed or poly-V belt (8, 9).

3. Ancillary component drive according to Claim 1, characterised in that the shaft (10) of the hydrostatic motor (HM) is directly or indirectly connected with the sun gear (2) of the planetary gear differential (PD) via a gearbox cable or a toothed or polyV belt.

4. Ancillary component drive according to Claim 1, characterised in that the diameter of the sun gear (2) is larger by at least a factor of 2 than the diameter of the planetary gear(s) (11) establishing the connection to the ring gear (1) and being supported at the spider (3).

5. Ancillary component drive according to Claim 1, characterised in that at least the pump (HP), preferably the hydrostatic motor (HM) too, is designed as an axial piston unit.

6. Ancillary component drive according to Claim 1, characterised in that the shaft (7) of the pump (HP) can, via a drive train (18) with clutch (19), be connected with an air conditioning compressor (KK) which can thus be switched on.

7. Ancillary component drive according to Claim 1, characterised in that at nₘₐₓ the flow rate of the pump (HP) is at least three times that of the hydrostatic motor (HM) at nₘₐₓ.

8. Ancillary component drive according to Claim 1, characterised in that an electronic control system (R) is provided with input and output periphery, data and programme storing option and microprocessor, which organs are connected with one another via an internal data BUS system.

9. Ancillary component drive according to Claim 8, characterised in that the ancillary component drive can be controlled with control system (R) in such a way that the ancillary component allocated to the consumer requiring most energy can still be operated at a sufficient minimum speed.

10. Ancillary component drive according to Claim 8, characterised in that the control system (R) is informed of the power requirement of the vehicle's electrical on-board network (BN) by a current sensor (SS) and controls the system on the basis of this information in such a way that the alternator (G) is driven at a speed which is sufficient for a direct supply of the electrical on-board network (BN), so that the battery (B) is not or only to a minor extent required for supplying power for the on-board network.

11. Ancillary component drive according to Claim 8, characterised in that the fan (L) can, in dependence of the control function executed by the control system (R), be uncoupled from and coupled to its drive train via a coupling (KL).

## Revendications

1. Entraînement hydrostatique-mécanique d'accessoires notamment du ventilateur, de l'alternateur et de la pompe à eau d'un véhicule automobile, comportant une pompe (HP) réglable entraînée par le moteur du véhicule et un moteur hydrostatique (HM) entraîné par le liquide hydraulique sous pression fourni par la pompe, entraînement caractérisé en ce que l'entraînement des accessoires se fait par l'intermédiaire d'une transmission hydrostatique-mécanique en continu comprenant la pompe (HP), le moteur hydrostatique (HM) et un différentiel planétaire à trois axes (PD), la roue creuse (1) du différentiel planétaire (PD) étant reliée au moteur (M), et la pompe (HP) ainsi que la roue solaire (2) du différentiel planétaire (PD) étant reliées au moteur hydrostatique (HM) chaque fois par une liaison d'entraînement fixe, et l'entraînement des accessoires (L, G, WP) se fait à partir de l'élément (3) du différentiel planétaire (PD) par des transmissions correspondantes (4, 5, 6).

2. Entraînement d'accessoires selon la revendication 1, caractérisé en ce que l'entraînement se fait à partir du moteur (M) vers l'axe de pompe (7) et de celui-ci vers la roue creuse (1) du différentiel planétaire (PD), chaque fois par l'intermédiaire d'une courroie trapézoïdale crantée (8, 9).

3. Entraînement d'accessoires selon la revendication 1, caractérisé en ce que l'axe (10) du moteur hydrostatique (HM) est relié directement ou indirectement par une ligne de transmission ou une courroie trapézoïdale crantée à la roue solaire (2) du différentiel planétaire (PD).

4. Entraînement d'accessoires selon la revendication 1, caractérisé en ce que diamètre de la roue solaire (2) est au moins supérieur d'un facteur 2 au diamètre des roues planétaires (11) qui sont montées sur l'élément (3) du différentiel planétaire et assurent la liaison avec la roue creuse (1).

5. Entraînement d'accessoires selon la revendication 1, caractérisé en ce qu'au moins la pompe (HP) et de préférence également le moteur hydrostatique (HM), correspondent à une construction à pistons axiaux.

6. Entraînement d'accessoires selon la revendication 1, caractérisé en ce que l'axe (7) de la pompe (HP) peut être relié par une ligne de transmission (8) à l'embrayage commutable (19) avec un compresseur de climatisation (KK) qui se branche de cette manière.

7. Entraînement d'accessoires selon la revendication 1, caractérisé en ce que la pompe (HP) possède pour (nₘₐₓ) un débit au moins triple de celui du moteur hydrostatique (HM) pour la vitesse (nₘₐₓ).

8. Entraînement d'accessoires selon la revendication 1, caractérisé par une installation de régulation et de commande électronique (R) avec des périphériques d'entrée et de sortie, des mémoires de données de programme, des microprocesseurs,, tous éléments reliés par un système de bus de données, internes.

9. Entraînement d'accessoires selon la revendication 8, caractérisé en ce que l'installation de régulation et de commande (R) effectue une régulation de l'entraînement d'accessoires dans un sens tel que l'accessoire associé à l'utilisateur le plus consommateur de puissance peut encore tourner à une vitesse de rotation minimale suffisante.

10. Entraînement d'accessoires selon la revendication 8, caractérisé en ce que l'installation de régulation et de commande (R) reçoit d'un capteur de courant (SS) les informations concernant la demande en courant du réseau électrique embarqué (BN) du véhicule et, en fonction de ces informations, effectue une régulation du système de façon que le générateur (G) tourne à une vitesse de rotation suffisante pour une alimentation directe du réseau électrique embarqué (BN) pour que la batterie (M) ne soit pas ou ne soit que légèrement sollicitée pour l'alimentation du réseau embarqué.

11. Entraînement d'accessoires selon la revendication 8, caractérisé en ce que le ventilateur (L) peut être embrayé ou débrayé de sa ligne de transmission en fonction de la régulation par l'installation de régulation et de commande (R),, à l'aide d'un embrayage (KL).
